# EUROPEAN PATENT APPLICATION

(11) **EP 4 604 292 A1**
(43) Date of publication of application: **20.08.2025**
(21) Application number: 23910881.4
(22) Date of filing: 28.12.2023
(51) Int. Cl.: H01M 50/244, H01M 50/204, H01M 50/202, H01M 50/271

(54) **BATTERY AND ELECTRIC APPARATUS**

(30) Priority: 30.12.2022 WO PCT/CN2022/144191; 01.11.2023 CN 202322953532 U
(71) Applicant: Contemporary Amperex Technology (Hong Kong) Limited, Hong Kong (HK)
(72) Inventor: SHI, Weigang, Ningde, Fujian 352100 (CN); ZHANG, Lifei, Ningde, Fujian 352100 (CN); WANG, Zhi, Ningde, Fujian 352100 (CN); LUO, Wenchao, Ningde, Fujian 352100 (CN); WANG, Xiaofang, Ningde, Fujian 352100 (CN); REN, Jizhuang, Ningde, Fujian 352100 (CN); SHI, Si, Ningde, Fujian 352100 (CN); SUN, Hao, Ningde, Fujian 352100 (CN); CHENG, Runquan, Ningde, Fujian 352100 (CN)
(74) Representative: von Tietzen und Hennig, Nikolaus
(86) International application number: PCT/CN2023/142987
(87) International publication number: WO 2024/140967

(57) **Abstract**

This application discloses a battery (100) and an electrical device, belonging to the technical field of batteries. The battery (100) includes a battery cell, a first box (10) and a second box (20), and the first box (10) includes a first end wall (11). The second box (20) and the first box (10) jointly enclose and form a closed space for accommodating the battery cell, the second box (20) includes a second end wall (21) and two third side walls (23), the second end wall (21) is disposed opposite to the first end wall (11) along a first direction (z), and the two third side walls (23) are disposed opposite to each other along a third direction (y) and connected to the second end wall (21). The third side wall (23) includes a third surface (230) facing the closed space, a fourth surface (231) facing away from the closed space and a second side surface (232) connecting the third surface (230) and the fourth surface (231); and the second side surface (232) includes a flat surface and a transition surface (2322) for hermetic connection with the first box (10), and the flat surface is connected to and smoothly transitions to the transition surface (2322). With this design, the battery (100) has higher hermeticity and reliability.

## Description

### CROSS-REFERENCE TO RELATED APPLICATIONS

The present application claims priority to Chinese Patent Application No. 202322953532.4 entitled "BATTERY AND ELECTRICAL DEVICE" filed on November 1, 2023, and the present application claims priority to PCT Patent Application No. PCT/CN2022/144191 entitled "BATTERY AND ELECTRICAL DEVICE" filed on December 30, 2022, which is incorporated herein by reference in its entirety.

### TECHNICAL FIELD

The present application relates to the technical field of batteries, and in particular, to a battery and an electrical device.

### BACKGROUND

Energy saving and emission reduction are the key to the sustainable development of the automotive industry, and electric vehicles have become an important part of the sustainable development of the automotive industry by virtue of their advantages of energy saving and environmental protection. For electric vehicle, battery technology is a crucial factor driving the development thereof.

In the development of battery technology, how to improve the reliability of batteries is an urgent technical problem that needs to be solved in battery technology.

### SUMMARY

In view of the above problem, the present application provides a battery and an electrical device that can improve the reliability of the battery.

In a first aspect, the present application provides a battery. The battery includes a battery cell, a first box and a second box, and the first box includes a first end wall. The second box and the first box jointly enclose and form a closed space for accommodating the battery cell, the second box includes a second end wall and two third side walls, the second end wall is disposed opposite to the first end wall along a first direction, and the two third side walls are disposed opposite to each other along a third direction and connected to the second end wall. The third side wall includes a third surface facing the closed space, a fourth surface facing away from the closed space and a second side surface connecting the third surface and the fourth surface; and the second side surface includes a flat surface and a transition surface for hermetic connection with the first box, and the flat surface is connected to and smoothly transitions to the transition surface.

In technical solutions of embodiments of the present application, the second side surface includes a flat surface and a transition surface for hermetic connection with the first box, and the flat surface is connected to and smoothly transitions to the transition surface. With this design, a good sealing surface can be formed when the first box and the second box are connected, reducing the risk of sealing failure after the first box and the second box are connected. The battery has higher hermeticity, thus improving the reliability of the battery.

In some embodiments, the flat surface includes a first flat surface and a second flat surface, the first flat surface is disposed at one end that is of the third side wall and that is facing away from the second end wall, the two second flat surfaces are respectively disposed at two ends of the third side wall along a second direction, the transition surface connects the first flat surface and the second flat surface, so that the first flat surface and the second flat surface have a smooth transition, and the second direction, the first direction and the third direction intersect in pairs.

In the above solutions, the first flat surface and the second flat surface are non-coplanar surfaces, and the transition surface connects the first flat surface and the second flat surface to allow a smooth transition between the first flat surface and the second flat surface, which can significantly reduce the risk of sealing failure at a transition position between the first flat surface and the second flat surface.

In some embodiments, the transition surface is a circular arc transition surface.

In the above solutions, by disposing the transition surface as a circular arc transition surface, the first flat surface can smoothly transition to the second flat surface, so that a sealing structure can be smoothly disposed between the third side wall and the first box, reducing the risk of sealing failure due to damage to the sealing structure caused by stress concentration of the sealing structure, which is conducive to the sealing performance between the second side surface and the first box, and improving the hermeticity and reliability of the battery.

In some embodiments, the transition surface has a first edge in the third direction, the first edge is circular arc-shaped, and a radius of the first edge is greater than or equal to 10 mm.

The first edge may correspond to an extension trajectory of the transition surface, and the first edge may also refer to an edge of the transition surface parallel to its extension direction. In the above solutions, by defining the first edge of the transition surface in a circular arc shape, i.e., defining the first edge as a circular arc line, the transition surface extends in an arc-shaped trajectory, and by disposing the radius of the first edge to be greater than or equal to 10 mm, the first flat surface can smoothly transition to the second flat surface, and the sealing structure can be gently disposed between the third side wall and the first box, effectively reducing the risk of sealing failure due to damage to the sealing structure caused by stress concentration of the sealing structure, which is conducive to the sealing performance between the second side surface and the first box, and improving the hermeticity and reliability of the battery.

In some embodiments, the transition surface includes a first transition surface and a second transition surface connected to each other, an edge of the first transition surface in the third direction is flat, and an edge of the second transition surface in the third direction is circular arc-shaped.

In the above solutions, by disposing the first transition surface and the second transition surface, on the one hand, the first flat surface can smoothly transition to the second flat surface, which is conducive to improving the sealing performance between the second side surface and the first box, and improving the hermeticity and reliability of the battery, and on the other hand, the first transition surface can provide a flat surface for locking of the third side wall and the first box, so that a locking piece (such as a bolt) can pass through the first box and be locked into the first transition surface stably and with good hermeticity, thereby improving the structural stability of the battery, and enabling the battery to have higher reliability.

In some embodiments, a quantity of the first transition surfaces is n, with n ≥ 1, and a quantity of the second transition surfaces is n+1; and any one of the first transition surfaces is disposed between two adjacent second transition surfaces.

In the above solutions, by disposing the quantity of second transition surfaces to be one more than that of the first transition surfaces and disposing any one of the first transition surfaces between the two adjacent second transition surfaces, on the one hand, the first flat surface can smoothly transition to the second flat surface, that is, the transition surfaces connected to the first flat surface and the second flat surface are both the second transition surfaces with arc surfaces, reducing the risk of sealing failure caused by formation of edges and corners between the flat surfaces. On the other hand, by disposing the first transition surface, a plurality of locking positions can be provided between the third side wall and the first box, which is conducive to effective connection of the locking piece to the third side wall and the first box, improving the structural stability of the battery, and enabling the battery to have higher reliability.

In some embodiments, a length of the first transition surface is greater than or equal to 6 mm.

In the above solutions, by disposing the length of the first transition surface to be greater than or equal to 6 mm, one or more locking positions can be disposed on the first transition surface, which is conducive to effective connection of the locking piece to the third side wall and the first box, improving the structural stability of the battery, and enabling the battery to have higher reliability.

In some embodiments, the flat surface includes two second flat surfaces, the two second flat surfaces are respectively disposed at two ends of the third side wall along the second direction, one end of one of the two second flat surfaces and one end of the other of the two second flat surfaces face away from each other, and are connected through the transition surface, and the second direction, the first direction and the third direction intersect in pairs.

In the above solutions, a smooth transition between two second flat surfaces disposed opposite to each other through a circular arc surface can be conducive to forming a good sealing surface between the first box and the second side surface, enabling the battery to have higher hermeticity.

In some embodiments, the second end wall has a first side surface in the second direction, the second direction, the first direction and the third direction intersect in pairs, and the second flat surface is flush with the first side surface.

In the above solutions, the second flat surface is flush with the first side surface, which can reduce the risk of generating a gap between the first side wall and the second side surface, reduce the risk of generating a gap between the connecting portion and the second flat surface, and thus improve the hermeticity of the battery.

In some embodiments, the second end wall includes a first portion and a second portion, the second portion is located on one side of the first portion and connected to the first portion along the third direction. A size of the first portion in the second direction is greater than a size of the second portion in the second direction.

In the above solutions, the second end wall includes a first portion and a second portion. By disposing the size of the first portion in the second direction to be greater than the size of the second portion in the second direction, a notch is formed between the first portion and the second portion, or in other words, an end portion of the second end wall is narrowed. Since the end portion of the second end wall is not utilized by the battery cell, by narrowing the portion, on the one hand, the volume of the battery can be reduced, and the installation space of the battery can be saved, and on the other hand, an effect of reducing the weight of the battery can be achieved, so that the battery is lightweight.

In some embodiments, the second portion has a third side surface in the second direction, the third side surface is flush with the second flat surface.

In the above solutions, disposing the second flat surface to be flush with the third side surface of the second portion is conducive to hermeticity between the third side wall and the second end wall and the first box, reducing the risk of sealing failure between the first box and the second box due to a gap generated by the third side wall and the second end wall at the second portion, and enabling the battery to have higher reliability.

In some embodiments, the first portion has a fourth side surface in the second direction, and the fourth side surface protrudes from the third side surface along the second direction.

In the above solutions, the fourth side surface protrudes from the third side surface along the third direction, enabling a notch to be formed at a portion of the first box and the second box corresponding to a portion between the third side surface and the fourth side surface, or it is understood that the first box and the second box are narrowed at the portion, which on the one hand, can reduce the volume of the battery and save the installation space of the battery, and on the other hand, can achieve an effect of reducing the weight of the battery, so that the battery is lightweight.

In some embodiments, the first portion has a third flat surface in the third direction, and one end of the third flat surface is in circular arc transition connection with the third side surface, and the other end of the third flat surface is in circular arc transition connection with the fourth side surface along the second direction.

In the above solutions, the third flat surface is disposed between the third side surface and the fourth side surface. By disposing the one end of the third flat surface to be in circular arc transition connection with the third side surface and the other end to be in circular arc transition connection with the fourth side surface, the risk of damage to a sealing structure between the second end wall, the third side wall and the first box due to stress concentration can be reduced, which is conducive to the hermeticity between the first box and the second box, and enabling the battery to have higher reliability.

In some embodiments, the second end wall has a first side surface in the second direction, the flat surface includes a first flat surface, the first flat surface is disposed at one end that is of the third side wall and that is facing away from the second end wall, an end portion of the first flat surface smoothly transitions to the first side surface through the transition surface, and the second direction, the first direction and the third direction intersect in pairs.

In the above solutions, the flat surface includes the first flat surface and the transition surface. The first flat surface can form a good seal with the first box. By disposing the transition surface between the first flat surface and a side surface of the second end wall, a smooth transition between the first flat surface and the side surface of the second end wall can be achieved, which can be conducive to forming a good sealing surface between the first box and the second box, enabling the battery to have higher hermeticity.

In some embodiments, the second end wall has a first side surface in the second direction, the first box further includes a first side wall, one end of the first side wall is connected to the first end wall, the other end of the first side wall is connected to the first side surface, the second direction, the first direction and the third direction intersect in pairs.

In the above solutions, by connecting one end of the first side wall of the first box to the first side surface of the second box to achieve connection between the first box and the second box, the connection between the first box and the second box can be achieved without disposing a flange structure protruding along the second direction, thereby improving the space utilization rate of the battery in the second direction to accommodate more battery cells or reducing the volume of the battery, and thus improving the volumetric energy density of the battery.

In some embodiments, an inner surface of the first side wall is connected to the first side surface.

In the above solutions, by connecting the inner surface of the first side wall (i.e. a surface that is of the first side wall and that is facing the first side surface) to the first side surface, a size of the battery in the second direction can be effectively reduced to increase the volumetric energy density of the battery as much as possible.

In some embodiments, the second end wall has a first surface facing the first end wall, and one end that is of the first side wall and that is away from the first end wall exceeds the first surface along a direction of the first end wall pointing towards the second end wall.

In the above solutions, the end that is of the first side wall and that is away from the first end plate exceeds the first surface, so that the first side wall may be directly connected to the first side surface, and on the one hand, the assembly difficulty and the manufacturing cost caused by the indirect connection of the first side wall to the first side surface through an intermediate connector can be effectively reduced, and on the other hand, an inner surface of a portion of the first end wall exceeding the first surface may be connected to the first side surface, and a size of the battery in the second direction can be effectively reduced to increase the volumetric energy density of the battery as much as possible.

In some embodiments, the second end wall has a second surface facing away from the first end wall, and the end that is of the first side wall and that is away from the first end wall does not exceed the second surface along a direction of the first end wall pointing towards the second end wall.

In the above solutions, the end that is of the first side wall and that is away from the first end wall does not exceed the second surface, so that a size of the battery in the first direction is controlled, and enabling the battery to have a higher volumetric energy density.

In some embodiments, the battery further includes a first fastener, and the first side wall is connected to the first side surface through the first fastener.

In the above solutions, the first fastener is disposed to connect the first side wall and the first side surface, so that there is higher connection stability between the first side wall and the first side surface, and the structural stability of the battery is improved.

In some embodiments, the first side wall is provided with a first through hole, the first side surface is provided with a first threaded hole, and the first fastener passes through the first through hole and is connected to the first threaded hole.

In the above solutions, the first fastener may be a connecting component with an external thread such as a bolt and a screw, which can be effectively connected to the first threaded hole, improve the connection stability between the first side wall and the first side surface, and allow good hermeticity between the first side wall and the first side surface.

In some embodiments, the battery further includes a first sealing element, and the first sealing element is disposed between the first side wall and the first side surface.

In the above solutions, by disposing a first sealing element between the first side wall and the first side surface, the hermeticity between the first side wall and the first side surface can be improved, thus improving the hermeticity of the battery.

In some embodiments, a quantity of the first side walls is two, and the two first side walls are disposed opposite to each other along the second direction; the second end wall is located between the two first side walls, and the second end wall has two first side surfaces disposed opposite to each other along the second direction; and the first side surface corresponds one-to-one to the first side wall.

In the above solutions, the quantity of the first side walls is two, and the two first side walls are disposed opposite to each other along the second direction and are respectively connected to corresponding first side surfaces, which can effectively improve the space utilization rate of the battery in the second direction, thus increasing the volumetric energy density of the battery.

In some embodiments, the second box further includes two second side walls, the two second side walls are disposed opposite to each other along the second direction and connected to the second end wall, and the battery cell is disposed between the two second side walls.

In the above solutions, two opposite second side walls are disposed on the second end wall along the second direction. On the one hand, the structural strength of the second box can be improved, on the other hand, a mounting region of the battery cell can be defined, so that the battery cell can be stably assembled in the second box, and on the other hand, since the second side wall protrudes from the surface of the second end wall, when the battery cell is bonded to the second box by glue, a glue overflow space can be effectively controlled, and the risk of waste and environmental pollution caused by glue overflow can be reduced.

In some embodiments, openings are respectively formed at two ends of the first box along the third direction, and the two third side walls respectively close the two openings.

In the above solutions, by disposing a third side wall, on the one hand, components such as explosion-proof valves, water-cooled connectors, or high- and low-voltage plug-in connectors can be mounted on the third side wall to enable the battery to perform normal charging and discharging operations; and on the other hand, compared with a flange structure protruding along the third direction disposed between the first box and the second box, by disposing the third side wall to close an opening, the space utilization rate of the battery in the third direction can be improved, and the volumetric energy density of the battery can be increased.

In some embodiments, a size of one of the third side walls along the first direction is smaller than a size of the other one of the third side walls along the first direction.

In the above solutions, the larger third side wall may be mounted with components such as explosion-proof valves, water-cooled connectors, or high- and low-voltage plug-in connectors to enable the battery to perform normal charging and discharging operations; and by reducing the size of the other one of the third side walls, the size of a portion of the first box corresponding to the third side wall can be adaptively increased, increasing the proportion of the first box to the battery (in this embodiment, the first box may be an upper box with a lower material cost and density), thereby lowering the manufacturing cost of the battery and increasing the weight energy density of the battery.

In some embodiments, the first box includes two connecting portions, the two connecting portions are respectively located at the two ends of the first box along the third direction, the connecting portion peripherally forms the opening, and the connecting portion is connected to the second side surface.

In the above solutions, by disposing a connecting portion to be connected with the second side surface of the third side wall, the connection stability and hermeticity of the first box and the second box can be improved.

In some embodiments, the first box further includes a fourth side wall, and the fourth side wall is adjacent to the first side wall. One end of the fourth side wall is connected to the first end wall, and the connecting portion protrudes from the fourth side wall in a direction facing away from the closed space.

In the above solutions, the first box may be an upper box, and the second box may be a lower box. In a manufacturing process of the battery, the material cost and density of the upper box may be lower than those of the lower box. Therefore, by disposing a fourth side wall to increase the proportion of the first box in the battery, the manufacturing cost of the battery is effectively reduced and the weight energy density of the battery is increased.

In some embodiments, the battery further includes a second fastener, and the connecting portion is connected to the second side surface through the second fastener.

In the above solutions, by disposing the second fastener to connect the second side surface and the connecting portion, the connection stability between the connecting portion and the second side surface is improved, and the structural stability of the battery is improved.

In some embodiments, the connecting portion is provided with a second through hole, the second side surface is provided with a second threaded hole, and the second fastener passes through the second through hole and is connected to the second threaded hole.

In the above solutions, the second fastener may be a connecting component with an external thread such as a bolt or a screw, which can be effectively connected to the second threaded hole, improve the connection stability between the connecting portion and the second side surface, and allow good hermeticity between the connecting portion and the second side surface.

In some embodiments, the battery further includes a second sealing element, and the second sealing element is disposed between the connecting portion and the second side surface.

In the above solutions, by disposing the second sealing element between the connecting portion and the second side surface, the hermeticity between the connecting portion and the second side surface can be improved, thus improving the hermeticity of the battery.

In some embodiments, the battery further includes a first sealing element, and the first sealing element is disposed between the first side wall and the first side surface. Two ends of the first sealing element are respectively connected to two second sealing elements.

In the above solutions, the first sealing element and the second sealing element may be integrally formed or separately connected. By disposing the first sealing element and the second sealing element, the good hermeticity between the first box and the second box can be achieved, thereby improving the reliability of the battery.

In some embodiments, the second end wall is provided with a mounting portion for mounting the battery to an electrical device.

In the above solutions, the second end wall is provided with the mounting portion to achieve stable assembly of the battery, so that the battery can provide stable electrical energy.

In some embodiments, a material density of the first box is lower than a material density of the second box.

In the above solutions, since the first side wall is connected to the first side surface, the proportion of the first box to the battery is increased, and the material density of the first box is smaller than that of the second box, the density of the battery is reduced, and the weight of the battery is reduced under the same volume, thus increasing the weight energy density of the battery.

In some embodiments, a material of the first box is plastic, and a material of the second box is aluminum alloy.

In the above solutions, the first box may be an upper box of the battery, the second box may be a lower box of the battery, and the second box is made of an aluminum alloy material, so that the second box has higher structural strength and rigidity, and plays a greater protective role for the battery cell. As an upper box, the first box plays a role of closing the battery cell and the upper and lower boxes, and it is made of plastic, so that the manufacturing cost of the battery can be effectively reduced, and the weight of the battery can be effectively reduced to improve the weight energy density of the battery.

In some embodiments, the second end wall is configured to carry the battery cell.

In the above solutions, the second end wall may serve as an assembly base for assembling the battery cell, which is conducive to the assembly of the battery cell.

In a second aspect, the present application further provides an electrical device including the battery according to any one of the first aspect, where the battery is configured to provide electrical energy.

The above description is only an overview of the technical solutions of the present application. In order to have a clearer understanding of the technical means of the present application, it can be implemented according to the content of the specification, and in order to make other purposes, features and advantages of the present application more evident and understandable, the detailed description of embodiments of the present application are listed below.

### BRIEF DESCRIPTION OF DRAWINGS

Various other advantages and benefits will become clear to a person of ordinary skill in the art by reading the detailed description of an preferable embodiment below. The accompanying drawings are only used for an objective of showing the preferable embodiment, and are not considered as a limitation to the present application. Moreover, in all of the accompanying drawings, the same reference sign is used for indicating the same component. In the figures:
FIG. 1 is a schematic diagram of a vehicle in some embodiments of the present application;
FIG. 2 is a schematic diagram of a battery in some embodiments of the present application;
FIG. 3 is a stereoscopic exploded diagram of a battery in some embodiments of the present application;
FIG. 4 is a schematic diagram of a first box in some embodiments of the present application;
FIG. 5 is a schematic diagram of a second box in some embodiments of the present application;
FIG. 6 is an enlarged view of A in FIG. 5;
FIG. 7 is a partial schematic diagram of the first box in some embodiments of the present application;
FIG. 8 is a schematic diagram of a third side wall in some embodiments of the present application;
FIG. 9 is a schematic diagram of a first flat surface, a second flat surface and a transition surface in some embodiments of the present application;
FIG. 10 is a schematic diagram of a third side wall in other embodiments of the present application;
FIG. 11 is a partial schematic diagram of a second box in other embodiments of the present application;
FIG. 12 is a schematic diagram of a partial structure of the second box in other embodiments of the present application;
FIG. 13 is a partial schematic diagram of a first box in other embodiments of the present application;
FIG. 14 is a partial schematic diagram of a second box in still some other embodiments of the present application;
FIG. 15 is a schematic diagram of a second box in some other embodiments of the present application; and
FIG. 16 is a partial schematic diagram of a first box in yet some other embodiments of the present application.

Reference numerals: 100-battery; 1000-vehicle; 200-controller; 300-motor; 10-first box; 11-first end wall; 12-first side wall; 120-first through hole; 13-opening; 14-connecting portion; 140-second through hole; 15-fourth side wall; 20-second box; 21-second end wall; 210-first side surface; 2100-first threaded hole; 211-first surface; 212-second surface; 213-first portion; 2130-fourth side surface; 2131-third flat surface; 214-second portion; 2140-third side surface; 22-second side wall; 23-third side wall; 230-third surface; 231-fourth surface; 232-second side surface; 2320-first flat surface; 2321-second flat surface; 2322-transition surface; 2322a-first transition surface; 2322b-second transition surface; 23220-first edge; 2324-circular arc surface; 2323-second threaded hole; 24-crossbeam; 30-first sealing element; 31-second sealing element; 40-mounting portion; z-first direction; x-second direction; and y-third direction.

### DETAILED DESCRIPTION OF EMBODIMENTS

Embodiments of the technical solution of the present application are described in detail below in conjunction with the accompanying drawings. The following embodiments are only used to more clearly illustrate the technical solution of the present application, and therefore, are merely examples and cannot be used to limit the protection scope of the present application.

Unless otherwise defined, all technical and scientific terms used herein bear the same meanings as what is normally understood by a person skilled in the technical field of the present application. The terms used herein are merely intended to describe specific embodiments but not to limit the present application. The terms "include" and "contain" and any variations thereof used in the specification, claims, and brief description of drawings of the present application are intended as non-exclusive inclusion.

In the description of the embodiments of the present application, the terms "first", "second", and the like are merely intended to distinguish between different objects, and shall not be understood as any indication or implication of relative importance or any implicit indication of the number, particular sequence or primary-secondary relationship of the technical features indicated. In the descriptions of the embodiments of the present application, "a plurality of" means two or more, unless otherwise specifically defined.

Reference to "embodiments" in this specification means that particular features, structures, or characteristics described with reference to the embodiments may be included in at least one embodiment of the present application. Occurrence of the phrase in various places in this specification does not necessarily refer to the same embodiment, nor is an independent or alternative embodiment that is mutually exclusive with other embodiments. It is understood explicitly and implicitly by a person skilled in the art that the embodiments described in this specification may be combined with other embodiments.

In the description of embodiments of the present application, the term "a plurality of" means two or more (including two). Similarly, "a plurality of groups" means two or more groups (including two groups), and "a plurality of pieces" means two or more pieces (including two pieces).

In the description of embodiments of the present application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of the present application, but not intended to indicate or imply that the indicated device or component is necessarily located in the specified direction or constructed or operated in the specified direction. Therefore, such terms are not to be understood as a limitation on embodiments of the present application.

In the descriptions of the embodiments of the present application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. A person of ordinary skill in the art can understand specific meanings of these terms in the embodiments of the present application as appropriate to specific situations.

In the present application, the battery cell may include, but is not limited to, a lithium-ion secondary battery, a lithium-ion primary battery, a lithium-sulfur battery, a sodium-lithium-ion battery, a sodium-ion battery, a magnesium-ion battery, etc. The shape of the battery cell may include, but is not limited to, cylindrical, flat, cuboidal, or other shapes, etc. The battery cell may include, but is not limited to, a cylindrical battery cell, a prismatic battery cell, a blade battery cell, and a pouch-type battery cell according to the manner of packaging.

In some high-power applications such as electric vehicles, the application of batteries includes three levels: battery cell, battery module and battery. The battery module is formed by electrically connecting a certain quantity of battery cells together and placing them in a frame to protect the battery cells from external shocks, heat, vibration, etc. The battery refers to the final state of the battery system installed in the electric vehicle. The battery mentioned in the embodiments of the present application refers to a single physical module including one or more battery cells to provide higher voltage and capacity.

The battery generally includes a first box and a second box. The first box and the second box are connected to jointly enclose and form a closed space. The battery cell is disposed in the closed space to reduce the risk of liquid or other foreign matters affecting the charging or discharging of the battery cells.

After assembly, the surfaces of the first box and the second box that come into contact with each other are generally sealing surfaces, and sealing structures are generally provided with sealing structures to improve the hermeticity of the first box and the second box.

In the development of battery technology, how to improve the reliability of batteries is an urgent technical problem that needs to be solved in battery technology. The sealing surface generally includes a plurality of surfaces, and the position where two adjacent surfaces are connected usually forms edges and corners. Due to the existence of the edges and corners, the positions where two adjacent surfaces are connected have a higher risk of sealing failure, thus reducing the reliability of the battery.

In view of this, the present application provides a battery. The battery includes a battery cell, a first box and a second box, and the first box includes a first end wall. The second box and the first box jointly enclose and form a closed space for accommodating the battery cell, the second box includes a second end wall and two third side walls, the second end wall is disposed opposite to the first end wall along a first direction, and the two third side walls are disposed opposite to each other along a third direction and connected to the second end wall. The third side wall includes a third surface facing the closed space, a fourth surface facing away from the closed space and a second side surface connecting the third surface and the fourth surface; and the second side surface includes a flat surface and a transition surface for hermetic connection with the first box, and the flat surface is connected to and smoothly transitions to the transition surface. With this design, a good sealing surface can be formed when the first box and the second box are connected, reducing the risk of sealing failure after the first box and the second box are connected, and enabling the battery to have higher hermeticity, thus improving the reliability of the battery.

The technical solutions described in the embodiments of the present application are applicable to a battery cell, a battery and an electrical device using the battery.

The electrical device includes but is not limited to: electric power cart, electric vehicle, ship, spacecraft, etc. For example, the spacecraft include an airplane, a rocket, a space shuttle, and a spaceship, etc.

The battery disclosed in the embodiments of the present application may be applicable to, but is not limited to, use in a battery cabinet, a container-type energy storage device, etc. The energy storage device may include a plurality of batteries disclosed in the present application.

The battery disclosed in the embodiments of the present application may be applicable to, but is not limited to, use in an electrical device such as a vehicle, a ship or an aircraft. A power system of the electrical device may be composed of the battery disclosed in the present application.

The embodiments of the present application provide an electrical device using a battery as a power source. The electric device may be, but is not limited to, an electric bicycle, an electric motorcycle, an electric vehicle, a ship, a heavy truck, a bus, a spacecraft, etc. The spacecraft may include an airplane, a rocket, a space shuttle, a spaceship, etc.

For ease of description in the following embodiments, a vehicle 1000 is used as an example of the electrical device according to an embodiment of the present application.

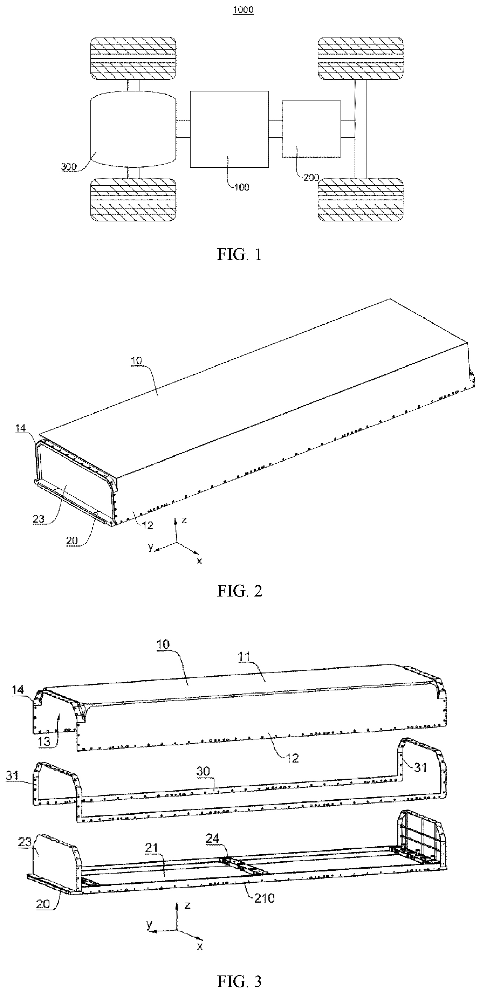

Please refer to FIG. 1. FIG. 1 is a schematic diagram of a vehicle 1000 in some embodiments of the present application. The vehicle 1000 may be an oil-fueled vehicle, a natural gas vehicle or a new energy vehicle, and the new energy vehicle may be a battery electric vehicle, a hybrid electric vehicle or a range-extended electric vehicle. The type of the vehicle 1000 may be a car, an off-road vehicle, a heavy truck, or bus, etc. The interior of the vehicle 1000 is provided with a battery 100, and the battery 100 may be disposed at the bottom, head or rear of the vehicle 1000. The battery 100 may be configured to supply power to the vehicle 1000. For example, the battery 100 may serve as an operating power source of the vehicle 1000 for circuitry of the vehicle 1000, for example, for the working power requirements of the vehicle 1000 in start-up, navigation and operation.

The vehicle 1000 may further include a controller 200 and a motor 300. The controller 200 is configured to control the battery 100 to supply power to the motor 300, for example, to start or navigate the vehicle 1000, or meet the operating power requirements of the vehicle in operation.

In some embodiments of the present application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

To meet different power requirements, the battery 100 may include a plurality of battery cells. The plurality of battery cells may be connected in a series, parallel, or series-and-parallel pattern. The series-and-parallel pattern refers to a combination of series connection and parallel connection. The battery 100 may also be referred to as a battery pack. Optionally, a plurality of battery cells may be connected in a series, parallel, or series-and-parallel pattern to form a battery module, and a plurality of battery modules may be connected in a series, parallel, or series-and-parallel pattern to form the battery 100. That is, a plurality of battery cells may directly form the battery 100, or a battery module may be first formed, and the battery module may then form the battery 100.

For example, referring to FIG. 2, the battery 100 may include a plurality of battery cells (not shown in the figure). The battery 100 may further include a box, the box has a closed chamber inside, and a plurality of battery cells are accommodated in the closed chamber. As shown in FIG. 3, the box includes a first box 10 and a second box 20, and the first box 10 and the second box 20 are snap-fitted together. The shapes of the first box 10 and the second box 20 may be determined according to the shape in which a plurality of battery cells are combined, and each of the first box 10 and the second box 20 may have one opening 13, or may have a frame-shaped structure composed of a plurality of wall portions. For example, referring to FIG. 3, the first box 10 may include three wall portions, the three wall portions form a U-shaped frame, two openings 13 are formed at two ends along a length direction of the first box 10, the second box 20 may include three wall portions, the three wall portions form another U-shaped frame, and two opposite wall portions along a length direction of the second box 20 correspond one-to-one to the openings 13 and are configured to close the corresponding openings 13. The two U-shaped frames are mutually snap-fitted to form a box with a closed chamber. A plurality of battery cells are disposed in the closed chamber after being connected with each other in a series, parallel, or series-and-parallel pattern.

Optionally, the battery 100 may also include other structures, which will not be repeatedly described herein. For example, the cell may further include a busbar component, and the busbar component is configured to achieve electrical connection between a plurality of battery cells, e.g. in a series, parallel, or series-and-parallel pattern. Specifically, the busbar component may achieve electrical connection between the battery cells by connecting electrode terminals of the battery cells. Furthermore, the busbar component may be fixed to the electrode terminal of the battery cell by welding. The electrical energy of the plurality of battery cells may be further drawn out by a conductive mechanism passing through the box.

According to different power requirements, the quantity of battery cells can be disposed to any numerical value. A plurality of battery cells may be connected in a series, parallel, or series-and-parallel manner to achieve a larger capacity or power. Since the quantity of battery cells included in each battery 100 may be large, in order to facilitate mounting, the battery cells may be disposed in groups, and each group of the battery cells constitutes a battery module. The quantity of battery cells included in the battery module is not limited, and may be disposed as required. The battery 100 may include a plurality of battery modules, and these battery modules may be connected in a series, parallel, or series-and-parallel pattern. A plurality of battery cells may be arranged in a group and form one or more battery packs by a bundling member, and the bundled battery packs are accommodated in a closed space. A plurality of battery packs may be arranged along a length, width or height direction of the box.

According to some embodiments of the present application, referring to FIGS. 2-3, 8-12, 14, and 15, the battery 100 includes the battery cell (not shown in the figure), the first box 10 and the second box 20, and the first box 10 includes a first end wall 11. The first box 10 includes a first end wall 11. The second box 20 and the first box 10 jointly enclose and form a closed space for accommodating battery cells, and the second box 20 includes a second end wall 21 and two third side walls 23, the second end wall 21 and the first end wall 11 are disposed opposite to each other in a first direction z, and the two third side walls 23 are disposed opposite to each other in a third direction y and connected to the second end wall 21. The third side wall 23 includes a third surface 230 facing the closed space, a fourth surface 231 facing away from the closed space and a second side surface 232 connecting the third surface 230 and the fourth surface 231; and the second side surface 232 includes a flat surface and a transition surface 2322 for hermetic connection with the first box 10, and the flat surface is connected to and smoothly transitions to the transition surface 2322.

The flat surface may be an upper surface of the third side wall 23 in the first direction z, an outer side surface of the third side wall 23 in a second direction x, etc.

The flat surface and transition surface 2322 for hermetic connection with the first box 10 may be understood as at least a portion of a sealing structure being disposed on the flat surface and the transition surface 2322 after the assembly of the first box 10 and the second box 20 is completed, and the sealing structure may be a sealing element or a weld, etc.

The connection and smooth transition between the flat surface and the transition surface 2322 may be understood as a non-right angle transition between the flat surface and the transition surface 2322.

The transition surface 2322 may be an arc surface or may be a combination of one or more beveled surfaces and one or more arc surfaces.

In some embodiments, the first box 10 may be regarded as an upper box of the battery 100, the first end wall 11 may be regarded as a top wall of the battery 100, and the first side wall 12 may be a portion connected to the first end wall 11 at one end and not in the same plane as the first end wall 11; and the first side wall 12 may be connected to the first end wall 11 by welding, bonding or bolt connection, etc., and the first side wall 12 may also be integrally formed with the first end wall 11.

The second box 20 may be regarded as a lower box of the battery 100, the second end wall 21 may be regarded as a bottom wall of the battery 100, and the first direction z may be a height direction of the battery 100, that is, the top wall and the bottom wall are opposite to each other along the height direction of the battery 100. The first direction z may also be understood as a direction of gravity.

The first box 10 and the second box 20 are connected to each other to form a closed space capable of accommodating battery cells.

The first direction z intersects with the second direction x, which may mean that the first direction z and the second direction x are not parallel.

In technical solutions of embodiments of the present application, the second side surface 232 includes the flat surface and the transition surface 2322 for hermetic connection with the first box 10, and the flat surface is connected to and smoothly transitions to the transition surface 2322. With this design, a good sealing surface can be formed when the first box 10 and the second box 20 are connected, reducing the risk of sealing failure after the first box 10 and the second box 20 are connected, and the battery 100 has higher hermeticity, thus improving the reliability of the battery 100.

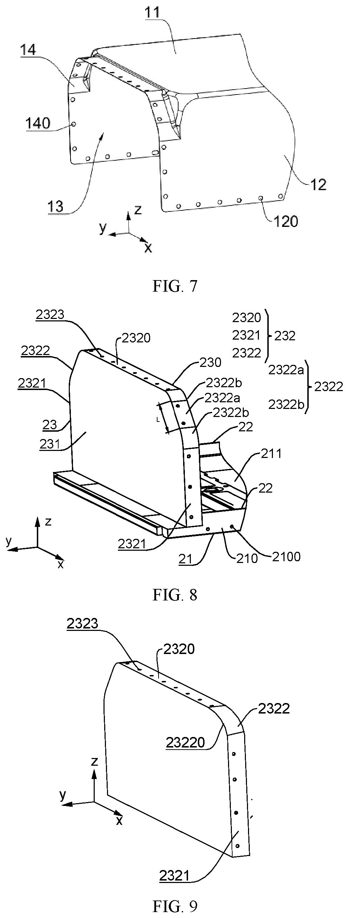

According to some embodiments of the present application, referring to FIGS. 8-11, the flat surface includes a first flat surface 2320 and a second flat surface 2321. The first flat surface 2320 is disposed at one end that is of the third side wall 23 and that is facing away from the second end wall 21, and two second flat surfaces 2321 are respectively disposed at two ends of the third side wall 23 along the second direction x. The transition surface 2322 connects the first flat surface 2320 and the second flat surface 2321, so that the first flat surface 2320 smoothly transitions to the second flat surface 2321. The second direction x, the first direction z and the third direction y intersect in pairs.

The first flat surface 2320 may be an upper surface of the third side wall 23, which may be a flat surface. The second flat surface 2321 may be an outer side surface of the third side wall 23, which may be a smooth surface. In some embodiments, the first flat surface 2320 and the second flat surface 2321 are perpendicular to each other. The transition surface 2322 is a portion connecting the first flat surface 2320 and the second flat surface 2321, which enables a smooth transition between the first flat surface 2320 and the second flat surface 2321. The smooth transition may refer to a non-right angle transition relationship between the first flat surface 2320 and the second flat surface 2321.

In some embodiments, the transition surface 2322 may be an arc surface or may be a combination of one or more beveled surfaces and one or more arc surfaces.

In the above solutions, the first flat surface 2320 and the second flat surface 2321 are non-coplanar surfaces, and the transition surface 2322 connects the first flat surface 2320 and the second flat surface 2321, so that the first flat surface 2320 smoothly transitions to the second flat surface 2321, which can significantly reduce the risk of sealing failure at a transition position between the first flat surface 2320 and the second flat surface 2321.

According to some embodiments of the present application, referring to FIG. 9, the transition surface 2322 is a circular arc transition surface.

The transition surface 2322 is a circular arc transition surface, which may be understood as the entire transition surface 2322 being a circular arc transition surface.

The circular arc transition surface may refer to a surface extending along a circular arc-shaped trajectory. The transition surface 2322 is a circular arc transition surface, which may be understood to mean that the first flat surface 2320 and the second flat surface 2321 are connected by a circular arc surface 2324, that is, the first flat surface 2320 and the second flat surface 2321 may have no edges and corners.

In some embodiments, a sealing structure may be disposed between the first box 10 and the second box 20, so that the first box 10 is in hermetic connection with the second box 20. For example, a second sealing element 31 (see FIG. 3) may be disposed between the second side surface 232 and the first box 10, and the second sealing element 31 may be supported by the transition surface 2322. Since the first flat surface 2320 transitions to the second flat surface 2321 through the circular arc surface 2324, the risk of stress concentration of the second sealing element 31 is small.

In the above solutions, by disposing the transition surface 2322 as a circular arc transition surface, the first flat surface 2320 can smoothly transition to the second flat surface 2321, so that the sealing structure can be smoothly disposed between the third side wall 23 and the first box 10, reducing the risk of sealing failure due to damage to the sealing structure caused by stress concentration of the sealing structure, which is conducive to the sealing performance between the second side surface 232 and the first box 10, and improving the hermeticity and reliability of the battery 100.

According to some embodiments of the present application, the transition surface 2322 has a first edge in the third direction y, the first edge is circular arc-shaped, and a radius of the first edge is greater than or equal to 10 mm.

The first edge 23220 may correspond to an extension trajectory of the transition surface 2322, and the first edge 23220 may also refer to an edge of the transition surface 2322 parallel to its extension direction. In some embodiments, one end of the first edge 23220 is connected to the first flat surface 2320, and the other end of the first edge is connected to the second flat surface 2321.

In some embodiments, the first edge 23220 may be a circular arc line, and the radius of the first edge 23220 is greater than or equal to 10 mm. For example, the first edge 23220 may be 10 mm, 11 mm, 12 mm, 13 mm, or greater.

In some embodiments, rounding the first flat surface 2320 and the second flat surface 2321 can form a transition surface 2322 in the form of a circular arc surface.

In the above solutions, by defining the first edge of the transition surface 2322 as a circular arc shape, i.e., defining the first edge as a circular arc line, the transition surface 2322 extends in an arc-shaped trajectory, and by disposing the radius of the first edge to be greater than or equal to 10 mm, the first flat surface 2320 can smoothly transition to the second flat surface 2321, and the sealing structure can be gently disposed between the third side wall 23 and the first box 10, effectively reducing the risk of sealing failure due to damage to the sealing structure caused by stress concentration of the sealing structure, which is conducive to the sealing performance between the second side surface 232 and the first box 10, and improving the hermeticity and reliability of the battery 100.

According to some embodiments of the present application, as shown in FIG. 8, the transition surface 2322 includes a first transition surface 2322a and a second transition surface 2322b connected to each other, an edge of the first transition surface 2322a in the third direction y is flat, and an edge of the second transition surface 2322b in the third direction y is circular arc-shaped.

"The edge of the first transition surface 2322a in the third direction y is smooth" may be understood to mean that the first transition surface 2322a is a flat surface, and its surface is smooth and not a curved surface. "The edge of the second transition surface 2322b in the third direction y is circular arc-shaped" may be understood to mean that the second transition surface 2322b is a circular arc surface and its surface is a curved surface.

The first transition surface 2322a may be provided with a locking position for mating with a locking piece. For example, the first transition surface 2322a may be provided with a second threaded hole 2323, and the second threaded hole 2323 is configured to mate with the locking piece (e.g. a second fastener), so that the second side surface 232 is connected to the first box 10.

In the above solutions, by disposing the first transition surface 2322a and the second transition surface 2322b, on the one hand, the first flat surface 2320 can smoothly transition to the second flat surface 2321, which is conducive to improving the sealing performance between the second side surface 232 and the first box 10, and improving the hermeticity and reliability of the battery 100; and on the other hand, the first transition surface 2322a can provide a flat surface for locking of the third side wall 23 and the first box 10, so that a locking piece (such as a bolt) can pass through the first box 10 and be locked into the first transition surface 2322a stably and with good hermeticity, thereby improving the structural stability of the battery 100, and enabling the battery 100 to have higher reliability.

According to some embodiments of the present application, referring to FIG. 8, the quantity of the first transition surfaces 2322a is n, with n ≥ 1, and the quantity of the second transition surfaces 2322b is n+1; and any one of the first transition surfaces 2322a is disposed between two adjacent second transition surfaces 2322b.

The quantity of second transition surfaces 2322b is one more than the quantity of first transition surfaces 2322a, and any one of the first transition surfaces 2322a is disposed between two adjacent second transition surfaces 2322b. It may be understood that the first transition surface 2322a and the second transition surface 2322b are alternately connected, and a portion where the transition surface 2322 is connected to the first flat surface 2320 and the second flat surface 2321 is the second transition surface 2322b.

In some embodiments, as shown in FIG. 8, the quantity of first transition surfaces 2322a is 1, and the quantity of second transition surfaces 2322b is 2. The first transition surface 2322a is located between two second transition surfaces 2322b.

In other embodiments, the quantity of first transition surfaces 2322a may be 3, and when the quantity of first transition surfaces 2322a is 3, the quantity of second transition surfaces 2322b is 4. In other embodiments, when the quantity of first transition surfaces 2322a may be other values, for example, 4, 5 or 6, the quantity of second transition surfaces 2322b is always one more than the quantity of the first transition surfaces 2322a, for example, 5, 6 or 7.

In the above solutions, by disposing the quantity of second transition surfaces 2322b to be one more than that of the first transition surfaces 2322a and disposing any one of the first transition surfaces 2322a between the two adjacent second transition surfaces 2322b, on the one hand, the first flat surface 2320 can smoothly transition to the second flat surface 2321, that is, the transition surfaces 2322 connected to the first flat surface 2320 and the second flat surface 2321 are both the second transition surfaces 2322b with arc surfaces, reducing the risk of sealing failure caused by formation of edges and corners between the flat surfaces. On the other hand, by disposing the first transition surface 2322a, a plurality of locking positions can be provided between the third side wall 23 and the first box 10, which is conducive to effective connection of the locking piece to the third side wall 23 and the first box 10, improving the structural stability of the battery 100, and enabling the battery 100 to have higher reliability.

According to some embodiments of the present application, a length of the first transition surface 2322a is greater than or equal to 6 mm.

The length of the first transition surface 2322a is L, and a length direction of the first transition surface 2322a may be perpendicular to a thickness direction of the third side wall 23.

A value of the length of the first transition surface 2322a may be 6 mm, 7 mm, 8 mm, or larger values.

In the above solutions, by disposing the length of the first transition surface 2322a to be greater than or equal to 6 mm, one or more locking positions can be disposed on the first transition surface 2322a, which is conducive to effective connection of the locking piece to the third side wall 23 and the first box 10, improving the structural stability of the battery 100, and enabling the battery 100 to have higher reliability.

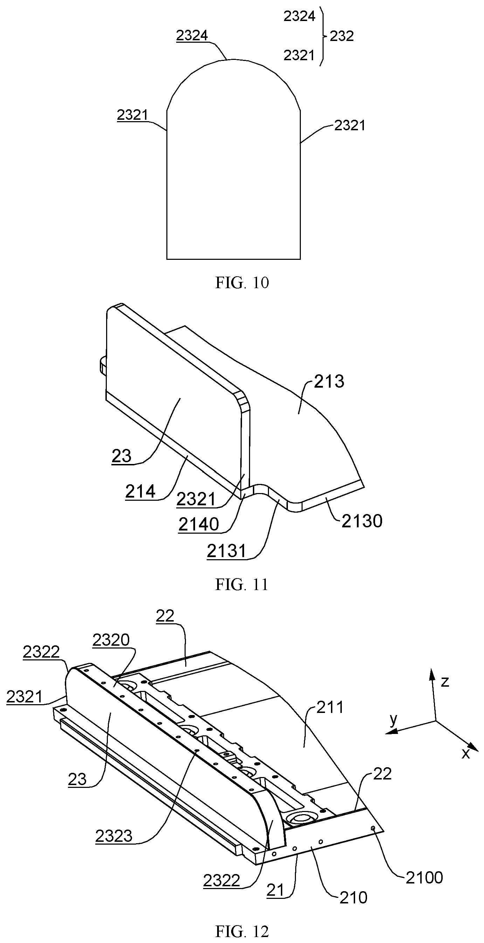

According to some embodiments of the present application, referring to FIG. 10, the flat surface includes two second flat surfaces 2321, the two second flat surfaces 2321 are respectively disposed at two ends of the third side wall 23 along the second direction x, the ends that is of the two second flat surfaces 2321 and that is facing away from the second end wall 21 are connected through the transition surface 2322, and the second direction x, the first direction z and the third direction y intersect in pairs.

The second side surface 232 includes a circular arc surface 2324 and second flat surfaces 2321. The two second flat surfaces 2321 are respectively disposed at the two ends of the third side wall 23 along the second direction x. One end of one of the two second flat surfaces 2321 and one end of the other of the two second flat surfaces 2321 face away from each other, and are connected by the circular arc surface 2324.

The circular arc surface 2324 may be an upper surface of the third side wall 23, the circular arc surface 2324 may be a curved surface, and an outer edge of the curved surface may be circular arc-shaped. The second flat surface 2321 may be an outer side surface of the third side surface 2140, which may be a smooth surface. A plurality of locking positions may be disposed on the second flat surface 2321. For example, a plurality of second threaded holes 2323 may be disposed to connect the third side wall 23 to the first box 10.

In the above solutions, a smooth transition between two second flat surfaces 2321 disposed opposite to each other through a circular arc surface 2324 can be conducive to forming a good sealing surface between the first box 10 and the second side surface 232, enabling the battery 100 to have higher hermeticity.

According to some embodiments of the present application, referring to FIG. 8, the second end wall 21 has a first side surface 210 in the second direction x, the second direction x, the first direction z and the third direction y intersect in pairs, and the second flat surface 2321 is flush with the first side surface 210.

The second flat surface 2321 is flush with the first side surface 210, which means that the outer side surface of the third side wall 23 in the second direction x is flush with the outer side surface of the second end wall 21 in the second direction x, that is, a surface of the second box 20 in the second direction x is a smooth surface.

In the above solutions, the second flat surface 2321 is flush with the first side surface 210, which can reduce the risk of generating a gap between the first side wall 12 and the second side surface 232, reduce the risk of generating a gap between the connecting portion 14 and the second flat surface 2321, and thus improve the hermeticity of the battery 100.

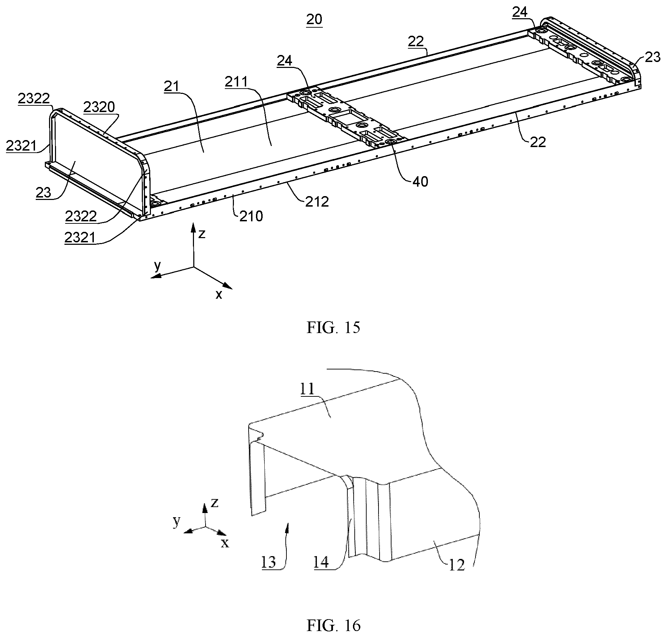

According to some embodiments of the present application, referring to FIGS. 11 and 16, the second end wall 21 includes a first portion 213 and a second portion 214, and the second portion 214 is located on one side of the first portion 213 and connected to the first portion 213 along the third direction y. A size of the first portion 213 in the second direction x is greater than a size of the second portion 214 in the second direction x.

The second end wall 21 includes a first portion 213 and a second portion 214, and the second portion 214 is located on one side of the first portion 213 and connected to the first portion 213 along the second direction x. A size of the first portion 213 in the second direction x is greater than a size of the second portion 214 in the second direction x.

The second end wall 21 may include a first portion 213 and a second portion 214. The phrase "the second portion 214 is located on one side of the first portion 213 and connected to the first portion 213 along the second direction x" may refer to an end portion of the first portion 213 being connected to the second portion 214 in the third direction y. In some embodiments, two ends of the first portion 213 may be provided with a second portion 214 in the third direction y.

"A size of the first portion 213 in the second direction x is greater than a size of the second portion 214 in the second direction x" may be understood to mean that a size of an end portion of the second end wall 21 in the second direction x is reduced.

In some embodiments, the first portion 213 may be a portion of the second end wall 21 for carrying the battery cell, and the second portion 214 may not carry the battery cell. For example, a projection of the battery cell does not fall on the second portion 214 along the first direction z.

In the above solutions, the second end wall 21 includes a first portion 213 and a second portion 214. By disposing the size of the first portion 213 in the second direction x to be greater than the size of the second portion 214 in the second direction x, a notch is formed between the first portion 213 and the second portion 214, or in other words, an end portion of the second end wall 21 is narrowed. Since the end portion of the second end wall 21 is not utilized by the battery cell, by narrowing the portion, on the one hand, the volume of the battery 100 can be reduced, and the installation space of the battery 100 can be saved, and on the other hand, an effect of reducing the weight of the battery 100 can be achieved, so that the battery 100 is lightweight.

According to some embodiments of the present application, referring to FIGS. 11 and 16, the second portion 214 has a third side surface 2140 in the second direction x, and the third side surface 2140 is flush with the second flat surface 2321.

The third side surface 2140 is a surface of the second portion 214 in the second direction x. The third side surface 2140 may be parallel to the first side surface 210.

The third side surface 2140 is flush with the second flat surface 2321, which may mean that a size of the third side wall 23 in the second direction x may be equal to a size of the second portion 214 in the second direction x.

In the above solutions, disposing the second flat surface 2321 to be flush with the third side surface 2140 of the second portion 214 is conducive to hermeticity between the third side wall 23 and the second end wall 21 and the first box 10, reducing the risk of sealing failure between the first box 10 and the second box 20 due to a gap generated by the third side wall 23 and the second end wall 21 at the second portion 214, and enabling the battery 100 to have higher reliability.

According to some embodiments of the present application, referring to FIGS. 11 and 16, the first portion 213 has a fourth side surface 2130 in the second direction x, and the fourth side surface 2130 protrudes from the third side surface 2140 along the second direction x.

The fourth side surface 2130 is a surface of the first portion 213 in the second direction x. The fourth side surface 2130 may be parallel to the first side surface 210.

The fourth side surface 2130 protrudes from the third side surface 2140 along the third direction y, which may be understood as the fourth side surface 2130 exceeding the third side surface 2140 in the third direction y.

In the above solutions, the fourth side surface 2130 protrudes from the third side surface 2140 along the third direction y, enabling a notch to be formed at a portion of the first box 10 and the second box 20 corresponding to a portion between the third side surface 2140 and the fourth side surface 2130, or it is understood that the first box 10 and the second box 20 are narrowed at the portion, which can reduce the volume of the battery 100 and save the installation space of the battery 100, and can also achieve an effect of reducing the weight of the battery 100, so that the battery 100 is lightweight.

According to some embodiments of the present application, referring to FIGS. 11 and 16, the first portion 213 has a third flat surface 2131 in the third direction y, and one end of the third flat surface 2131 is in circular arc transition connection with the third side surface 2140, and the other end of the third flat surface 2131 is in circular arc transition connection with the fourth side surface 2130 along the second direction x.

The third flat surface 2131 is a surface of the first portion 213 in the third direction y. The third flat surface 2131 may be parallel to the fourth surface 231.

Rounding may be performed between the third flat surface 2131 and the third side surface 2140 to allow a circular arc transition connection between the third flat surface 2131 and the third side surface 2140. Rounding may be performed between the third flat surface 2131 and the fourth side surface 2130 to allow a circular arc transition connection between the third flat surface 2131 and the fourth side surface 2130.

In the above solutions, the third flat surface 2131 is disposed between the third side surface 2140 and the fourth side surface 2130. By disposing one end of the third flat surface 2131 to be in circular arc transition connection with the third side surface 2140 and the other end to be in circular arc transition connection with the fourth side surface 2130, the risk of damage to a sealing structure between the second end wall 21, the third side wall 23 and the first box 10 due to stress concentration can be reduced, which is conducive to the hermeticity between the first box 10 and the second box 20, and enabling the battery 100 to have higher reliability.

According to some embodiments of the present application, referring to FIG. 12, the second end wall 21 has the first side surface 210 in the second direction x, the flat surface includes a first flat surface 2320, the first flat surface 2320 is disposed at one end that is of the third side wall 23 and that is facing away from the second end wall 21, an end portion of the first flat surface 2320 smoothly transitions to the first side surface 210 through the transition surface 2322, and the second direction x, the first direction z and the third direction intersect y in pairs.

The second side surface 232 includes the first flat surface 2320 and the transition surface 2322. The first flat surface 2320 is disposed at the end that is of the third side wall 23 and that is facing away from the second end wall 21, and an end portion of the first flat surface 2320 smoothly transitions to a side surface of the second end wall 21 through the transition surface 2322.

In some embodiments, the first flat surface 2320 may be an upper surface of the third side wall 23, which may be a smooth surface. The transition surface 2322 may be an outer side surface of the third side wall 23, which may be a curved surface. For example, the transition surface 2322 is a circular arc surface.

"An end portion of the first flat surface 2320 smoothly transitions to a side surface of the second end wall 21 through the transition surface 2322" may be understood to mean that there is no edge and corner between the first flat surface 2320 and the side surface of the second end wall 21, and the first flat surface 2320 and the second end wall 21 are connected by the transition surface 2322 with the circular arc surface.

In the above solutions, the flat surface includes the first flat surface 2320 and the transition surface 2322. The first flat surface 2320 can form a good seal with the first box 10. By disposing the transition surface 2322 between the first flat surface 2320 and the side surface of the second end wall 21, a smooth transition between the first flat surface 2320 and the side surface of the second end wall 21 can be achieved, which can be conducive to forming a good sealing surface between the first box 10 and the second box 20, enabling the battery 100 to have higher hermeticity.

According to some embodiments of the present application, referring to FIGS. 2-6, the second end wall 21 has the first side surface 210 in the second direction x, the first box 10 further includes the first side wall 12, one end of the first side wall 12 is connected to the first end wall 11, the other end of the first side wall is connected to the first side surface 210, and the second direction x, the first direction z and the third direction y intersect in pairs.

In some embodiments, the first side surface 210 may be a surface of the second end wall 21 in the second direction x. In some embodiments, the first side surface 210 may not be a surface of the second end wall 21 in the second direction x. For example, the first side surface 210 may be a surface of other components disposed on the second end wall 21 in the second direction x. In some embodiments, the first side surface 210 may protrude from a surface of the second end wall 21 in the second direction x towards the first box 10.

Correspondingly, the first side surface 210 may be understood as a surface of the second end wall 21 that does not face or face away from the first end wall 11. In some embodiments, the first direction z is perpendicular to the second direction x.

"One end of the first side wall 12 is connected to the first end wall 11, the other end of the first side wall is connected to the first side surface 210" may mean that the first side wall 12 connects the first end wall 11 and the second end wall 21 to each other, and one end of the first side wall 12 away from the first end wall 11 is directly or indirectly connected to the first side surface 210, which may be understood to mean that a connecting surface of the first side wall 12 and the first end wall 11 is located on the first side surface 210 and does not protrude from outer contours of the first box 10 and the second box 20 in the second direction x. "One end of the first side wall 12 away from the first end wall 11 is directly or indirectly connected to the first side surface 210" may mean that the first side wall 12 is directly connected to the first side surface 210, or the first side wall 12 is indirectly connected to the first side surface 210 through an intermediate connector.

In the above solutions, by connecting one end of the first side wall 12 of the first box 10 to the first side surface 210 of the second box 20 to achieve connection between the first box 10 and the second box 20, the connection between the first box 10 and the second box 20 can be achieved without disposing a flange structure protruding along the second direction x, thereby improving the space utilization rate of the battery 100 in the second direction x to accommodate more battery cells or reducing the volume of the battery 100, and thus improving the volumetric energy density of the battery 100.

According to some embodiments of the present application, referring to FIGS. 2-6, an inner surface of the first side wall 12 is connected to the first side surface 210.

The inner surface of the first side wall 12 may refer to a surface of the first side wall 12 facing an interior of the battery 100. "An inner surface of the first side wall 12 is connected to the first side surface 210" may mean that a connection relationship between the inner surface of the first side wall 12 and the first side surface 210 is a face-to-face connection.

In the above solutions, by connecting the inner surface of the first side wall 12 (i.e., a surface that is of the first side wall 12 and that is facing the first side surface 210) to the first side surface 210, a size of the battery 100 in the second direction x can be effectively reduced to increase the volumetric energy density of the battery 100 as much as possible.

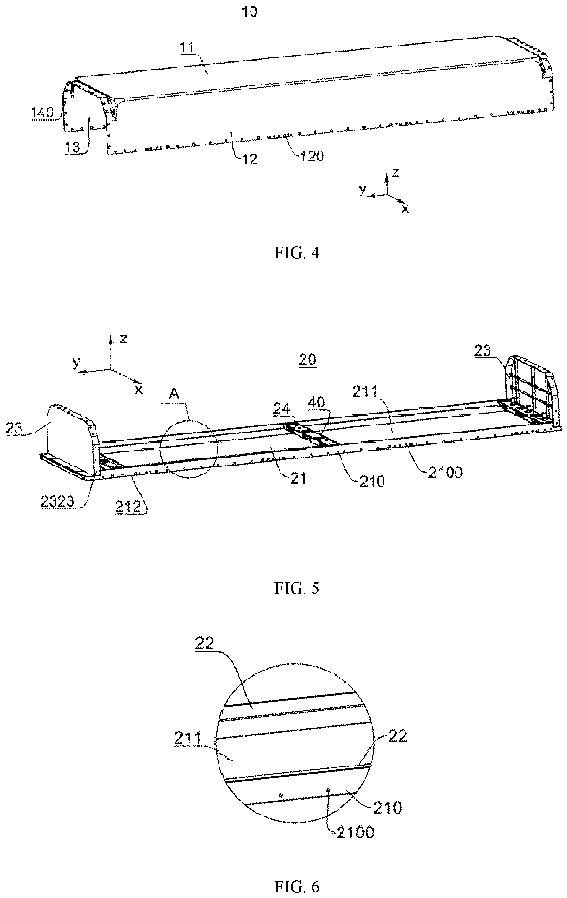

According to some embodiments of the present application, referring to FIGS. 5 and 6, the second end wall 21 has a first surface 211 facing the first end wall 11, and the end that is of the first side wall 12 and that is away from the first end wall 11 exceeds the first surface 211 along a direction of the first end wall 11 pointing towards the second end wall 21.

The second end wall 21 has the first surface 211 in the first direction z, and the first surface 211 is a surface of the second end wall 21 facing the first end wall 11. The first surface 211 may be regarded as an upper surface of the second end wall 21. In some embodiments, the battery cell is located between the first surface 211 and the first end wall 11.

"The end that is of the first side wall 12 and that is away from the first end wall 11 exceeds the first surface 211 along a direction of the first end wall 11 pointing towards the second end wall 21" may mean that an orthographic projection of the first side wall 12 on the plane where the first side surface 210 is located overlaps the first side surface 210, and the portion where the first side wall 12 and the first side surface 210 overlap may be a portion where the first side wall 12 and the first side surface 210 are connected to each other.

In the above solutions, the end that is of the first side wall 12 and that is away from a first end plate exceeds the first surface 211, so that the first side wall 12 may be directly connected to the first side surface 210, and on the one hand, the assembly difficulty and the manufacturing cost caused by the indirect connection of the first side wall 12 to the first side surface 210 through an intermediate connector can be effectively reduced, and on the other hand, an inner surface of a portion of the first end wall 11 exceeding the first surface 211 may be connected to the first side surface 210, and a size of the battery 100 in the second direction x can be effectively reduced to increase the volumetric energy density of the battery 100 as much as possible.

According to some embodiments of the present application, referring to FIGS. 5 and 6, the second end wall 21 has a second surface 212 facing away from the first end wall 11, and the end that is of the first side wall 12 and that is away from the first end wall 11 does not exceed the second surface 212 along a direction of the first end wall 11 pointing towards the second end wall 21.

The second end wall 21 has the second surface 212 in the first direction z, and the second surface 212 is a surface that is of the second end wall 21 and that is facing away from the first end wall 11. The second surface 212 may be regarded as a lower surface of the second end wall 21.

"The end that is of the first side wall 12 and that is away from the first end wall 11 does not exceed the second surface 212 along a direction of the first end wall 11 pointing towards the second end wall 21" may mean that the end that is of the first side wall 12 and that is away from the first end wall 11 is flush with the second surface 212 or is located in a position between the second surface 212 and the first end wall 11.

In the above solutions, the end that is of the first side wall 12 and that is away from the first end wall 11 does not exceed the second surface 212, so that a size of the battery 100 in the first direction z is controlled, and enabling the battery 100 to have a higher volumetric energy density.

In some embodiments, as shown in FIG. 3, the second direction x is a width direction of the battery 100. The battery 100 may be a prismatic battery. A height direction of the battery 100 may be the first direction z. The width direction and a length direction of the battery 100 may be directions which are perpendicular to each other, and both are perpendicular to the height direction. A size of the battery 100 in the length direction is generally larger than its size in the width direction, and in some embodiments, a side surface of the battery 100 in the width direction is a surface of the battery 100 with a larger area, i.e., a large surface. The first box 10 may be an upper box of the battery 100, and in the manufacturing process of the battery 100, the material cost and density of the upper box may be lower than those of the lower box. Therefore, when the second direction x is the width direction of the battery 100, the first side wall 12 can be regarded as a large surface (a surface with a larger area) of the battery 100, and the first side wall 12 may be disposed as large as possible, so that a portion of the second box 20 corresponding to the first side wall 12 is disposed as small as possible, thereby reducing the cost of the second box 20 and also reducing the overall weight of the battery 100, so that the battery 100 is more lightweight, which is conducive to the improvement of the weight energy density of the battery 100.

According to some embodiments of the present application, the battery 100 further includes a first fastener (not shown in the figure), and the first side wall 12 is connected to the first side surface 210 through the first fastener.

The first fastener is a connecting component that connects the first side wall 12 and the first side surface 210. In some embodiments, the first fastener may be a connecting piece such as a rivet, a screw or a bolt. In some other embodiments, the first fastener may also be a bonding layer disposed between the first side wall 12 and the first side surface 210.

In the above solutions, the first fastener is disposed to connect the first side wall 12 and the first side surface 210, so that there is higher connection stability between the first side wall 12 and the first side surface 210, and the structural stability of the battery 100 is improved.

According to some embodiments of the present application, in conjunction with FIGS. 6 and 7, the first side wall 12 is provided with a first through hole 120, the first side surface 210 is provided with a first threaded hole 2100, and the first fastener passes through the first through hole 120 and is connected to the first threaded hole 2100.

The first through hole 120 may refer to a hole-shaped structure that penetrates an outer surface and an inner surface of the first side wall 12. "The first side surface 210 is provided with a first threaded hole 2100" may refer to a hole-shaped structure with an internal thread formed on the first side surface 210, such as a self-tapping thread; or it may refer to a threaded hole of a blind rivet nut or a threaded hole of a pressing rivet nut disposed on the first side surface 210. In conjunction with FIGS. 6 and 7, the quantity of first through holes 120 may be plural, and a plurality of first through holes 120 are arranged at intervals along an extension direction of the first side wall 12 (the extension direction of the first side wall 12 is perpendicular to the first direction z and the second direction x); and the quantity of first threaded holes 2100 is also plural, and the first threaded holes 2100 are disposed corresponding to the first through holes 120.

"The first fastener passes through the first through hole 120 and is connected to the first threaded hole 2100" may mean that the first fastener has an external thread that mates with the first threaded hole 2100 to be capable of being threadedly connected with the first threaded hole 2100.

In the above solutions, the first fastener may be a connecting component with the external thread such as a bolt and a screw, which can be effectively connected to the first threaded hole 2100, improve the connection stability between the first side wall 12 and the first side surface 210, and allow good hermeticity between the first side wall 12 and the first side surface 210.

According to some embodiments of the present application, as shown in FIG. 3, the battery 100 further includes a first sealing element 30, the first sealing element 30 is disposed between the first side wall 12 and the first side surface 210.

The first sealing element 30 may be a component with a sealing characteristic and disposed between the first side wall 12 and the first side surface 210. In some embodiments, the first sealing element 30 may be a sealant or a sealing gasket, and the first sealing element 30 is clamped between the first side wall 12 and the first side surface 210.

In the above solutions, by disposing the first sealing element 30 between the first side wall 12 and the first side surface 210, the hermeticity between the first side wall 12 and the first side surface 210 can be improved, thus improving the hermeticity of the battery 100.

According to some embodiments of the present application, as shown in FIGS. 3, 4 and 7, the quantity of the first side walls 12 is two, and the two first side walls 12 are disposed opposite to each other along the second direction x; the second end wall 21 is located between the two first side walls 12, and the second end wall 21 has two first side surfaces 210 disposed opposite to each other along the second direction x; and the first side surface 210 corresponds one-to-one to the first side wall 12.

In some embodiments, the quantity of the first side walls 12 is two, and the two first side walls 12 are disposed opposite to each other along the second direction x to correspond to the two first side surfaces 210 of the second end wall 21 disposed opposite to each other in the second direction x. The second end wall 21 is located between the two first side walls 12, which may be understood as an outer contour of the battery 100 in the second direction x being defined by the two first side walls 12.

In the above solutions, the quantity of the first side walls 12 is two, and the two first side walls 12 are disposed opposite to each other along the second direction x and are respectively connected to corresponding first side surfaces 210, which can effectively improve the space utilization rate of the battery 100 in the second direction x, thus increasing the volumetric energy density of the battery 100.

In some other embodiments, the first side walls 12 may be one, the one first side wall 12 can save space on one side of the second direction x for the battery 100.

According to some embodiments of the present application, as shown in FIG. 6, the second box 20 further includes two second side walls 22, the two second side walls 22 are disposed opposite to each other along the second direction x and connected to the second end wall 21, and the battery cell is disposed between the two second side walls 22.

The second side wall 22 is a component disposed on the second end wall 21. The second side wall 22 may be disposed on the second end wall 21 by welding, bonding or bolt connection, etc., and the second side wall 22 may also be integrally formed with the second end wall 21. The second end wall 21 has a first surface 211 facing the first end wall 11, and the second side wall 22 protrudes from the first surface 211 along a direction of the second end wall 21 pointing towards the first end wall 11.

In some embodiments, the first side surface 210 may be a surface where the second side wall 22 and the first side wall 12 are interconnected.

In some embodiments, an outer surface of the second side wall 22 may be flush with the first side surface 210.

In the above solutions, two opposite second side walls 22 are disposed on the second end wall 21 along the second direction x. On the one hand, the structural strength of the second box 20 can be improved, on the other hand, a mounting region of the battery cell can be defined, so that the battery cell can be stably assembled in the second box 20, and on the other hand, since the second side wall 22 protrudes from the surface of the second end wall 21, when the battery cell is bonded to the second box 20 by glue, a glue overflow space can be effectively controlled, and the risk of waste and environmental pollution caused by glue overflow can be reduced.

According to some embodiments of the present application, referring to FIGS. 4 and 7, openings 13 are respectively formed at two ends of the first box 10 along the third direction y, and the two third side walls 23 respectively close the two openings 13.

When the first direction z is a height direction of battery 100, and the second direction x is a width direction of battery 100, the third direction y may be a length direction of battery 100.

The third side wall 23 is a component disposed on the second end wall 21. The third side wall 23 may be connected to the second end wall 21 by welding, bonding or bolt connection, etc., and the third side wall 23 may also be integrally formed with the second end wall 21. The second end wall 21 has a first surface 211 facing the first end wall 11, and the third side wall 23 protrudes from the first surface 211 along a direction of the second end wall 21 pointing towards the first end wall 11. The third side wall 23 may improve the structural strength of the first box 10. In some embodiments, the third side wall 23 may be mounted with components such as explosion-proof valves, water-cooled connectors, or high- and low-voltage connectors to enable the battery 100 to perform normal charging and discharging operations.

The openings 13 respectively formed at two ends of the first box 10 along the third direction y may be notch-shaped portions corresponding to the third side wall 23, and the third side wall 23 can correspondingly close the openings 13, reducing the risk of generating additional mutual interference or overlapping portions in the battery 100, thereby improving the utilization rate of manufacturing materials of the battery 100, and enabling the battery 100 to have a lower manufacturing cost; and at the same time, it also reduces the risk of generating additional mutual interference or overlapping portions in battery 100 to cause space waste. In some embodiments, a shape of a cross-section of the first box 10 may be a U shape.

In the above solutions, by disposing a third side wall 23, on the one hand, components such as explosion-proof valves, water-cooled connectors, or high- and low-voltage plug-in connectors can be mounted on the third side wall 23 to enable the battery 100 to perform normal charging and discharging operations; and on the other hand, compared with a flange structure protruding along the third direction y disposed between the first box 10 and the second box 20, by disposing the third side wall 23 to close an opening 13, the space utilization rate of the battery 100 in the third direction y can be improved, and the volumetric energy density of the battery 100 can be increased.

According to some embodiments of the present application, as shown in FIG. 15, a size of one of the third side walls 23 along the first direction z is smaller than a size of the other one of the third side walls 23 along the first direction z.

The size of the third side wall 23 in the first direction z may be regarded as a height of the third side wall 23. "A size of one of the third side walls 23 along the first direction z is smaller than a size of the other one of the third side walls 23 along the first direction z" may mean that the one of the third side walls 23 is higher and the other one of the third side walls 23 is lower. Since the heights of the two third side walls 23 are different, the resulting height difference may be compensated by the first box 10.

In the above solutions, the larger third side wall 23 may be mounted with components such as explosion-proof valves, water-cooled connectors, or high- and low-voltage plug-in connectors to enable the battery 100 to perform normal charging and discharging operations; and by reducing the size of the other one of the third side walls 23, the size of a portion of the first box 10 corresponding to the third side wall 23 can be adaptively increased, increasing the proportion of the first box 10 to the battery 100 (in this embodiment, the first box 10 may be an upper box with a lower material cost and density), thereby lowering the manufacturing cost of the battery 100 and increasing the weight energy density of the battery 100.

According to some embodiments of the present application, referring to FIGS. 7 and 8, the first box 10 includes two connecting portions 14, the two connecting portions 14 are respectively located at the two ends of the first box 10 along the third direction y, the connecting portion 14 peripherally forms the opening 13, and the connecting portion 14 is connected to the second side surface 232.

The third surface 230 may be an inner surface of the third side wall 23, the fourth surface 231 may be an outer surface of the third side wall 23, and the second side surface 232 may be an outer peripheral surface of the third side wall 23 located between the inner surface and the outer surface. The outer peripheral surface of the third side wall 23 may refer to an outer surface of the third side wall 23 in the first direction z and the second direction x.

The connecting portion 14 is a component located at an end portion of the first box 10 in the third direction y, which peripherally forms the opening 13 of the first box 10, and a contour of the connecting portion 14 fits with the second side surface 232 of the third side wall 23.

"The connecting portion 14 is connected to the second side surface 232" may mean that the first box 10 and the second box 20 are connected to each other by the connecting portion 14 and the second side surface 232 in the third direction y.

Referring to FIG. 7, the connecting portion 14 may be sheet-shaped, which mates with the second side surface 232. In some embodiments, a connection relationship between the connecting portion 14 and the second side surface 232 is a face-to-face connection.

In the above solutions, by disposing a connecting portion 14 to be connected with the second side surface 232 of the third side wall 23, the connection stability and hermeticity of the first box 10 and the second box 20 can be improved.

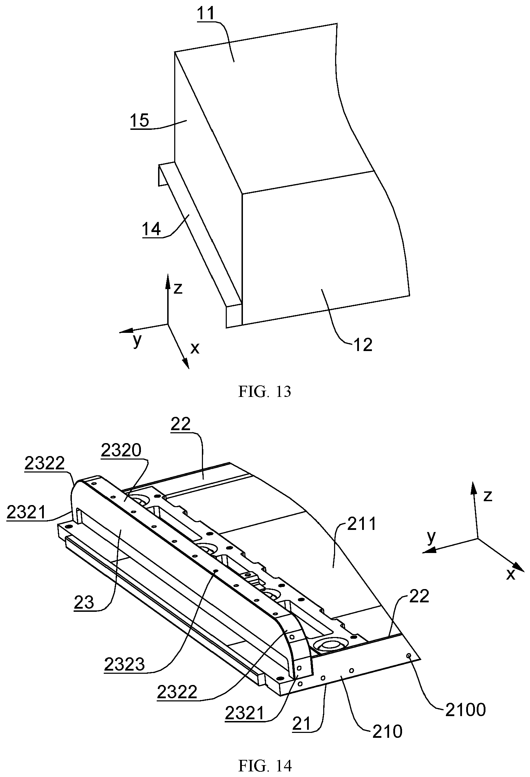

According to some embodiments of the present application, referring to FIGS. 13 and 14, the first box 10 further includes a fourth side wall 15, and the fourth side wall 15 is adjacent to the first side wall 12. One end of the fourth side wall 15 is connected to the first end wall 11, and the connecting portion 14 protrudes from the fourth side wall 15 in a direction facing away from the closed space.

The first end wall 11 has a lower surface facing the second end wall 21, the fourth side wall 15 is a component protruding from the lower surface and adjacent to the first side wall 12, the fourth side wall 15 may be connected to the first end wall 11 by welding, bonding or bolt connection, and the fourth side wall 15 may also be integrally formed with the first end wall 11. When the first box 10 has two first side walls 12 disposed opposite to each other along the second direction x, the fourth side wall 15 is located between the two first side walls 12, one end of the fourth side wall 15 is connected to the first end wall 11, and two opposite ends of the fourth side wall 15 in the second direction x are respectively connected to the two first side walls 12.

The connecting portion 14 may be protrusively disposed on the fourth side wall 15 from an interior of the closed space to an exterior of the closed space, the connecting portion 14 may be integrally formed with the fourth side wall 15, or the connecting portion 14 may be connected to the fourth side wall 15 by welding, bonding or bolt connection, etc.

In some embodiments, in conjunction with FIGS. 13 and 14, by disposing the fourth side wall 15, a size of the third side wall 23 in the first direction z can be reduced, that is, the larger a size of the fourth side wall 15 in the first direction z, the smaller the size of the third side wall 23 in the first direction z.

In the above solutions, the first box 10 may be an upper box, and the second box 20 may be a lower box. In a manufacturing process of the battery 100, the material cost and density of the upper box may be lower than those of the lower box. Therefore, by disposing a fourth side wall 15 to increase the proportion of the first box 10 in the battery 100, the manufacturing cost of the battery 100 is effectively reduced and the weight energy density of the battery 100 is increased.

According to some embodiments of the present application, the battery 100 further includes a second fastener (not shown in the figure), and the connecting portion 14 is connected to the second side surface 232 through the second fastener.

The second fastener is a connecting component that connects the second side surface 232 and the connecting portion 14. In some embodiments, the second fastener may be a connecting piece such as a rivet, a screw or a bolt. In some other embodiments, the second fastener may also be a bonding layer disposed between the connecting portion 14 and the second side surface 232. Referring to FIG. 8, when the second fastener is a threaded piece, such as a bolt, a corresponding second threaded hole 2323 may be disposed on the second side surface 232.

In the above solutions, by disposing the second fastener to connect the second side surface 232 and the connecting portion 14, the connection stability between the connecting portion 14 and the second side surface 232 is improved, and the structural stability of the battery 100 is improved.

According to some embodiments of the present application, as shown in FIGS. 7 and 8, the connecting portion 14 is provided with a second through hole 140, the second side surface 232 is provided with the second threaded hole 2323, and the second fastener passes through the second through hole 140 and is connected to the second threaded hole 2323.

The second through hole 140 may refer to a hole-shaped structure that penetrates an outer surface and an inner surface of the connecting portion 14. "The second side surface 232 is provided with the second threaded hole 2323" may refer to a hole-shaped structure with an internal thread formed on the second side surface 232, such as a self-tapping thread; or it may refer to a blind rivet nut or a pressing rivet nut disposed on the second side surface 232. In conjunction with FIGS. 7 and 8, the quantity of second through holes 140 may be plural, and a plurality of second through holes 140 may be arranged at intervals; the quantity of second threaded holes 2323 is also plural, and the first threaded holes 2100 is disposed corresponding to the first through holes 120.

"The second fastener passes through the second through hole 140 and is connected to the second threaded hole 2323" may mean that the second fastener has an external thread that mates with the second threaded hole 2323 to be capable of being threadedly connected with the second threaded hole 2323.

In the above solutions, the second fastener may be a connecting component with an external thread such as a bolt and a screw, which can be effectively connected to the second threaded hole 2323, improve the connection stability between the connecting portion 14 and the second side surface 232, and allow good hermeticity between the connecting portion 14 and the second side surface 232.

According to some embodiments of the present application, as shown in FIG. 3, the battery 100 further includes a second sealing element 31, the second sealing element 31 is disposed between the connecting portion 14 and the second side surface 232.

The second sealing element 31 may be a component with a sealing characteristic and disposed between the connecting portion 14 and the second side surface 232. In some embodiments, the second sealing element 31 may be a sealant or a sealing gasket, and the second sealing element 31 is clamped between the first flat surface 2320 and the connecting portion 14, between the second flat surface 2321 and the connecting portion 14, and between the transition surface 2322 and the connecting portion 14.

In the above solutions, by disposing the second sealing element 31 between the connecting portion 14 and the second side surface 232, the hermeticity between the connecting portion 14 and the second side surface 232 can be improved, thus improving the hermeticity of the battery 100.

According to some embodiments of the present application, as shown in FIG. 3, the battery 100 further includes a first sealing element 30, the first sealing element 30 is disposed between the first side wall 12 and the first side surface 210. Two ends of the first sealing element 30 are respectively connected to two second sealing elements 31.

In FIG. 3, the first sealing element 30 corresponds to a connecting portion between the first side surface 210 and the first side wall 12, which may extend along the length direction of the battery 100. The second sealing element 31 corresponds to a connecting portion between the second side surface 232 and the first box 10, which includes a portion extending along the width direction of the battery 100, a portion extending along the height direction of the battery 100 and a portion corresponding to the transition surface 2322.

In some embodiments, the first sealing element 30 and the second sealing element 31 may be structures independent of each other, and the first sealing element 30 and the second sealing element 31 are connected by bonding or in an intermediate connector. In other embodiments, the first sealing element 30 and the second sealing element 31 may be an integrated structure.

In the above solutions, the first sealing element 30 and the second sealing element 31 may be integrally formed or separately connected. By disposing the first sealing element 30 and the second sealing element 31, the good hermeticity between the first box 10 and the second box 20 can be achieved, thereby improving the reliability of the battery 100.

According to some embodiments of the present application, as shown in FIGS. 3 and 5, the second end wall 21 is provided with a mounting portion 40 for mounting the battery 100 to an electrical device.

The mounting portion 40 is a component disposed on the second end wall 21 for mounting the battery 100 to the electrical device. The mounting portion 40 may be a connection structure such as a nut or a connecting bracket disposed on the second end wall 21. In some embodiments, the quantity of mounting portions 40 may be plural, which may be arranged along the third direction y and the second direction x. In some embodiments, the mounting portion 40 may be M8, M10, M12, or M16 threaded hole structures provided on the second end wall 21.

In the above solutions, the second end wall 21 is provided with the mounting portion 40 to achieve stable assembly of the battery 100, so that the battery 100 can provide stable electrical energy.

According to some embodiments of the present application, a material density of the first box 10 is lower than a material density of the second box 20.

The material density is the mass per unit volume of a material in a specific volumetric state.

The material density of the first box 10 is smaller than that of the second box 20, so the density of the battery 100 is reduced, and the weight of the battery 100 is reduced under the same volume, thus increasing the weight energy density of the battery 100.

In some other embodiments, the material density of the first box 10 may also be equal to or greater than the material density of the second box 20.

According to some embodiments of the present application, the material of the first box 10 is plastic, and the material of the second box 20 is aluminum alloy.

The cost of plastic is lower than the cost of aluminum alloy, and the density of plastic is lower than that of aluminum alloy. The structural strength and rigidity of aluminum alloy are higher than those of plastic.

In the above solutions, the first box 10 may be an upper box of the battery 100, the second box 20 may be a lower box of the battery 100, and the second box 20 is made of an aluminum alloy material, so that the second box 20 has higher structural strength and rigidity, and plays a greater protective role for the battery cell. As an upper box, the first box 10 plays a role of closing the battery cell and the upper and lower boxes, and it is made of plastic, so that the manufacturing cost of the battery 100 can be effectively reduced, and the weight of the battery 100 can be effectively reduced to improve the weight energy density of the battery 100.

In some other embodiments, the first box 10 may also be made of materials such as aluminum, aluminum alloy, steel or stainless steel. In some other embodiments, the second box 20 may also be made of materials such as plastic, aluminum, steel, or stainless steel.

According to some embodiments of the present application, the second end wall 21 is configured to carry the battery cell.

During assembly, the battery cell may be assembled to the inner surface of the second end wall 21, and the second end wall 21 carrying the battery cell is conducive to the positioning of the battery cell.

In the above solutions, the second end wall 21 may serve as an assembly base for assembling the battery cell, which is conducive to the assembly of the battery cell.

According to some embodiments of the present application, an electrical device is further provided. The electrical device includes the battery 100 described above, and the battery 100 is configured to provide electrical energy. In some embodiments, the electrical device may be the vehicle 1000, and the type of the vehicle 1000 may be a heavy truck or a bus.

According to some embodiments of the present application, the present application further provides a battery 100, as shown in FIGS. 3-8. The battery 100 includes a first box 10, a second box 20 and a battery cell. The first box 10 is an upper box of the battery 100, the second box 20 is a lower box of the battery 100, the second box 20 and the first box 10 are connected to each other to jointly enclose and form a closed space, and the battery cell is disposed in the closed space. The first box 10 includes a first end wall 11, two first side walls 12 and two connecting portions 14. The first end wall 11 may be a top wall of the battery 100, and the two first side walls 12 are disposed opposite to the first end wall 11 along a second direction x (a width direction of the battery 100). The two connecting portions 14 are respectively located at two ends of the first box 10 in a third direction y (a length direction of the battery 100), and the connecting portions 14 peripherally form an opening 13. The second box 20 includes a second end wall 21 and two second side walls 22. The second end wall 21 may be a bottom wall of the battery 100, and the second box 20 has two first surfaces 211 disposed opposite to each other along the second direction x. The second end wall 21 may be provided with crossbeams 24, and the quantity of crossbeams 24 may be plural. A plurality of crossbeams 24 are arranged at intervals along the third direction y. The crossbeams 24 may improve the structural strength of the second box 20, and the battery cell may also be connected to the crossbeams 24. The two second side walls 22 are disposed opposite to each other on the second end wall 21 along the third direction y (the length direction of battery 100). The second side wall 22 has a first flat surface 2320 facing the first end wall 11, two second flat surfaces 2321 disposed opposite to each other along the second direction x, and a transition surface 2322 connecting the first flat surface 2320 and the second flat surfaces 2321.

The first end wall 11 and the second end wall 21 are disposed opposite to each other along the first direction z (a height direction of the battery 100). An inner surface of the first side wall 12 is connected to the first side surface 210, and a first sealing element 30 is disposed between the first side wall 12 and the first side surface 210. The first side wall 12 and the second side surface 232 are connected by a first fastener. The second side wall 22 corresponds to the connecting portion 14, and a second sealing element 31 is disposed between the second side wall 22 and the connecting portion 14. The first flat surface 2320, the second flat surface 2321, and the transition surface 2322 are all connected to the connecting portion 14 through a second fastener.

The crossbeam 24 is provided with a mounting portion 40 for mounting the battery 100 to an electrical device (such as a heavy truck or a bus).

In conclusion, it should be noted that the foregoing embodiments are merely for describing the technical solutions of the present application rather than for limiting the present application. Although the present application has been described in detail with reference to the foregoing embodiments, a person of ordinary skill in the art should appreciate that they can still make modifications to the technical solutions described in the foregoing embodiments or make equivalent replacements to some or all technical features thereof. However, these modifications or replacements do not cause the essence of the corresponding technical solutions to depart from the scope of the technical solutions of the embodiments of the present application, and shall all fall within the scope of the claims and specification of the present application. In particular, as long as there is no structural conflict, the various technical features mentioned in the embodiments can be combined in any manner. The present application is not limited to the specific embodiments disclosed in this specification but includes all technical solutions falling within the scope of the claims.

## Claims

1. A battery, **characterized in that** the battery comprises:
a battery cell;
a first box, comprising a first end wall;
a second box, enclosing and forming a closed space for accommodating the battery cell together with the first box,
wherein the second box comprises a second end wall and two third side walls, the second end wall is disposed opposite to the first end wall along a first direction, and the two third side walls are disposed opposite to each other along a third direction and connected to the second end wall, wherein the third side wall comprises a third surface facing the closed space, a fourth surface facing away from the closed space and a second side surface connecting the third surface and the fourth surface; and the second side surface comprises a flat surface and a transition surface for hermetic connection with the first box, and the flat surface is connected to and smoothly transitions to the transition surface.

2. The battery according to claim 1, **characterized in that** the flat surface comprises a first flat surface and a second flat surface, the first flat surface is disposed at one end that is of the third side wall and that is facing away from the second end wall, the two second flat surfaces are respectively disposed at two ends of the third side wall along a second direction, the transition surface connects the first flat surface and the second flat surface, so that the first flat surface and the second flat surface have a smooth transition, and the second direction, the first direction and the third direction intersect in pairs.

3. The battery according to claim 2, **characterized in that** the transition surface is a circular arc transition surface.

4. The battery according to claim 3, **characterized in that** the transition surface has a first edge in the third direction, the first edge is circular arc-shaped, and a radius of the first edge is greater than or equal to 10 mm.

5. The battery according to claim 2, **characterized in that** the transition surface comprises a first transition surface and a second transition surface connected to each other, an edge of the first transition surface in the third direction is flat, and an edge of the second transition surface in the third direction is circular arc-shaped.

6. The battery according to claim 5, **characterized in that** a quantity of the first transition surfaces is n, with n ≥ 1, and a quantity of the second transition surfaces is n+1; and any one of the first transition surfaces is disposed between two adjacent second transition surfaces.

7. The battery according to claim 6, **characterized in that** a length of the first transition surface is greater than or equal to 6 mm.

8. The battery according to claim 1, **characterized in that** the flat surface comprises two second flat surfaces, the two second flat surfaces are respectively disposed at two ends of the third side wall along a second direction, one end of one of the two second flat surfaces and one end of the other of the two second flat surfaces face away from each other, and are connected through the transition surface, and the second direction, the first direction and the third direction intersect in pairs.

9. The battery according to any one of claims 2 to 8, **characterized in that** the second end wall has a first side surface in the second direction, the second direction, the first direction and the third direction intersect in pairs, and the second flat surface is flush with the first side surface.

10. The battery according to any one of claims 2 to 8, **characterized in that** the second end wall comprises a first portion and a second portion, and the second portion is located on one side of the first portion and connected to the first portion along the third direction; and
a size of the first portion in the second direction is greater than a size of the second portion in the second direction.

11. The battery according to claim 10, **characterized in that** the second portion has a third side surface in the second direction, and the third side surface is flush with the second flat surface.

12. The battery according to claim 11, **characterized in that** the first portion has a fourth side surface in the second direction, and the fourth side surface protrudes from the third side surface along the second direction.

13. The battery according to claim 12, **characterized in that** the first portion has a third flat surface in the third direction, and one end of the third flat surface is in circular arc transition connection with the third side surface, and the other end of the third flat surface in circular arc transition connection with the fourth side surface along the second direction.

14. The battery according to claim 1, **characterized in that** the second end wall has a first side surface in a second direction, the flat surface comprises a first flat surface, the first flat surface is disposed at one end that is of the third side wall and that is facing away from the second end wall, an end portion of the first flat surface smoothly transitions to the first side surface through the transition surface, and the second direction, the first direction and the third direction intersect in pairs.

15. The battery according to any one of claims 1 to 14, **characterized in that** the second end wall has the first side surface in the second direction, and the first box further comprises a first side wall, one end of the first side wall is connected to the first end wall, the other end of the first side wall is connected to the first side surface, and the second direction, the first direction and the third direction intersect in pairs.

16. The battery according to claim 15, **characterized in that** an inner surface of the first side wall is connected to the first side surface.

17. The battery according to claim 15 or 16, **characterized in that** the second end wall has a first surface facing the first end wall, and one end that is of the first side wall and that is away from the first end wall exceeds the first surface along a direction of the first end wall pointing towards the second end wall.

18. The battery according to any one of claims 15 to 17, **characterized in that** the second end wall has a second surface facing away from the first end wall, and the end that is of the first side wall and that is facing away from the first end wall does not exceed the second surface along the direction of the first end wall pointing towards the second end wall.

19. The battery according to any one of claims 15 to 18, **characterized in that** the battery further comprises a first fastener, and the first side wall is connected to the first side surface through the first fastener.

20. The battery according to claim 19, **characterized in that** the first side wall is provided with a first through hole, the first side surface is provided with a first threaded hole, and the first fastener passes through the first through hole and is connected to the first threaded hole.

21. The battery according to any one of claims 15 to 20, **characterized in that** the battery further comprises a first sealing element, and the first sealing element is disposed between the first side wall and the first side surface.

22. The battery according to any one of claims 15 to 21, **characterized in that** a quantity of the first side walls is two, and the two first side walls are disposed opposite to each other along the second direction, the second end wall is located between the two first side walls, and the second end wall has the two first side surfaces disposed opposite to each other along the second direction; and the first side surface corresponds one-to-one to the first side wall.

23. The battery according to any one of claims 15 to 22, **characterized in that** the second box further comprises two second side walls, the two second side walls are disposed opposite to each other along the second direction and connected to the second end wall, and the battery cell is disposed between the two second side walls.

24. The battery according to any one of claims 15 to 23, **characterized in that** openings are respectively formed at two ends of the first box along the third direction, and the two third side walls respectively close the two openings.

25. The battery according to claim 24, **characterized in that** a size of one of the third side walls along the first direction is smaller than a size of the other one of the third side walls along the first direction.

26. The battery according to claim 24 or 25, **characterized in that** the first box comprises two connecting portions, the two connecting portions are respectively located at the two ends of the first box along the third direction, the connecting portion peripherally forms the opening, and the connecting portion is connected to the second side surface.

27. The battery according to claim 26, **characterized in that** the first box further comprises a fourth side wall, and the fourth side wall is adjacent to the first side wall; and
one end of the fourth side wall is connected to the first end wall, and the connecting portion protrudes from the fourth side wall in a direction facing away from the closed space.

28. The battery according to claim 26 or 27, **characterized in that** the battery further comprises a second fastener, and the connecting portion is connected to the second side surface through the second fastener.

29. The battery according to claim 28, **characterized in that** the connecting portion is provided with a second through hole, the second side surface is provided with a second threaded hole, and the second fastener passes through the second through hole and is connected to the second threaded hole.

30. The battery according to any one of claims 26 to 29, **characterized in that** the battery further comprises a second sealing element, wherein the second sealing element is disposed between the connecting portion and the second side surface.

31. The battery according to claim 30, **characterized in that** the battery further comprises the first sealing element, and the first sealing element is disposed between the first side wall and the first side surface,
wherein two ends of the first sealing element are respectively connected to the two second sealing elements.

32. The battery according to any one of claims 1 to 31, **characterized in that** the second end wall is provided with a mounting portion for mounting the battery to an electrical device.

33. The battery according to any one of claims 1 to 32, **characterized in that** a material density of the first box is lower than a material density of the second box.

34. The battery according to any one of claims 1 to 33, **characterized in that** a material of the first box is plastic, and a material of the second box is aluminum alloy.

35. The battery according to any one of claims 1 to 34, **characterized in that** the second end wall is configured to carry the battery cell.

36. An electrical device, **characterized in that** the electrical device comprises the battery according to any one of claims 1 to 35, and the battery is configured to provide electrical energy.
